# FASCICULE DE BREVET EUROPEEN

(11) **EP 1 557 742 B1**
(45) Date de publication et mention de la délivrance du brevet: **01.11.2017**
(21) Numéro de dépôt: 04300571.9
(22) Date de dépôt: 02.09.2004
(51) Int. Cl.: G06F 1/32, H04L 12/12

(54) **PROCÉDÉ DE RÉVEIL D'UN ORDINATEUR AUTONOME**
VERFAHREN ZUM AUFWECKEN EINES SELBSTSTÄNDIGEN RECHNERS
METHOD OF WAKING A STAND-ALONE COMPUTER

(30) Priorité: 31.12.2003 FR 0351241
(43) Date de publication de la demande: 27.07.2005
(73) Titulaire: SOCIETE FRANCAISE DU RADIO TELEPHONE (SFR), 75015 Paris (FR)
(72) Inventeur: Reisacher, Olivier, 38330, BIVIERS (FR)
(74) Mandataire: Ipside

(56) Documents cités:
- US-A1- 2003 045 273
- US-A1- 2003 081 579
- US-B1- 6 289 464

## Description

L'invention a pour objet un procédé de réveil d'un ordinateur autonome. Le domaine de l'invention est celui des télécommunications. Plus particulièrement le domaine de l'invention est celui du poussage d'information. Par poussage, on entend le fait d'enregistrer des données sur un appareil, l'enregistrement étant commandé à distance, et sans intervention de l'utilisateur de l'appareil, ou sans que l'appareil n'ait émis de requête pour recevoir les données. Dans ce cas, on parle de pousser une information dans un appareil. On parle encore "d'upload" (pour déchargement) de données vers l'appareil. Encore plus particulièrement, le domaine de l'invention est celui de l'économie d'énergie pour les ordinateurs autonomes.

Par ordinateur autonome on entend un ordinateur dont la seule source d'énergie est une batterie. Un tel ordinateur n'est en particulier pas relié au secteur pour son alimentation. Le cas le plus classique d'ordinateur autonome est un ordinateur dit portable.

Un ordinateur portable comporte un grand nombre de composants électroniques, processeur puissant, écran de grandes dimensions, mémoires vives, disques durs, lecteurs de supports divers et variés (CD-ROM, DVD, disquette, carte compact flash, etc.) qui font d'un tel appareil un grand consommateur d'énergie électrique. Afin de préserver au maximum leur autonomie, ces ordinateurs autonomes sont mis à la moindre occasion en mode de veille, aussi appelé mode de sommeil. Dans ce mode tous les composants, à l'exception de la mémoire vive, sont éteints. Le fait de préserver le contenu de la mémoire vive permet un redémarrage, ou sortie du mode de veille, plus rapide.

Le passage en mode de veille est automatisé. Dès que l'ordinateur portable détecte une inactivité, il passe automatiquement dans ce mode de manière à consommer un minimum d'énergie et donc à économiser l'énergie. La sortie de ce mode de veille est par contre à la discrétion de l'utilisateur de l'ordinateur portable. La sortie du mode de veille est assimilable à un redémarrage de l'ordinateur portable. Il existe donc un délai non négligeable entre le début du réveil et la disponibilité effective de l'ordinateur.

Dans la pratique, lorsqu'un utilisateur d'un ordinateur souhaite accéder à une information qui est en ligne, c'est-à-dire non directement sur son ordinateur mais qui doit être téléchargée, cet utilisateur doit démarrer son ordinateur portable, puis établir une connexion sur le réseau, puis enfin seulement commencer à se préoccuper de l'information qui l'intéresse. Dans ce document une information peut être et aller du courrier électronique à la mise à jour, en passant par le fichier audio. Une information est donc un contenu numérique correspondant à un ou plusieurs fichiers structurés ou non.

L'utilisateur d'un ordinateur portable se retrouve donc confronté à au moins deux difficultés lorsqu'il souhaite obtenir une information depuis une localisation extérieure à son ordinateur portable. La première est d'attendre le réveil de l'ordinateur portable. La seconde est d'établir une connexion permettant l'accès à ladite information extérieure. On considère ici qu'une information extérieure est une information qui n'est pas enregistrée dans une mémoire interne de l'ordinateur.

La seconde difficulté vient de la nature de l'ordinateur portable qui le destine à être mobile. Un tel ordinateur portable ne peut donc pas être connecté en permanence à un réseau de données, Internet, LAN (Local Area Nerwork, pour réseau local), ou autre, comme le serait un ordinateur de bureau alimenté par le secteur et connecté audit réseau via une interface physique Ethernet. Une telle interface correspond à une connexion par câble. Cette impossibilité de connexion permanente s'explique pour au moins deux raisons. La première de ces raisons est la consommation d'énergie requise par le maintien de cette connexion permanente. La deuxième raison, est le coût du maintien d'une connexion aérienne de type GPRS par exemple.

Dans l'état de la technique, un utilisateur d'un ordinateur portable souhaitant obtenir une information extérieure doit donc réveiller son ordinateur portable, établir une connexion en mode données et rechercher ladite information en espérant qu'elle soit accessible. Une fois l'information trouvée, il reste encore à patienter pendant le temps du téléchargement de l'information qui varie en fonction de la taille de l'information à télécharger.

### Dans l'état de la technique on connaît aussi le document US 6 289 464 B1.

Ce document décrit un procédé de réveil d'un ordinateur autonome comportant une carte de communication mobile où: la carte de communication mobile reçoit, via une voie aérienne, un message de réveil, la carte de communication mobile analyse le message de réveil reçu pour déterminer s'il y a lieu de réveiller l'ordinateur autonome, le cas échéant: la carte de communication mobile réveille l'ordinateur autonome. Le document US 2003/081579 A1 décrit un procédé de réveil d'un ordinateur autonome comportant un dispositif de connexion sans fil où: le dispositif de connexion sans fil reçoit, via une voie aérienne, un message de réveil, le dispositif de connexion sans fil réveille l'ordinateur autonome, l'ordinateur autonome effectue les opérations correspondant au message de réveil. Dans un mode de réalisation de l'invention on résout ces problèmes sur les ordinateurs portables munis d'une carte de communication selon une norme de communication mobile de génération supérieure ou égale à la deuxième génération. Ainsi ce type de carte fonctionne selon les normes GSM, GPRS, ou UMTS. Il est alors, par exemple, possible d'envoyer un message court à la carte de communication. Ce message court comporte un code instruction permettant d'identifier une action devant être effectuée par l'ordinateur portable. Si cette action correspond à une récupération d'information, alors le message court comporte aussi un identifiant de l'information à récupérer. Une fois ce message court reçu, la carte de communication réveille l'ordinateur portable qui peut alors effectuer la récupération d'information sans intervention de l'utilisateur.

Avec le procédé selon l'invention, il devient donc possible de récupérer une information de manière optimale, c'est-à-dire sans attente ni sollicitation de l'utilisateur. Le procédé selon l'invention minimise le nombre de tentatives de récupération, dans les faits il réduit ce nombre à une tentative. Le procédé selon l'invention minimise le temps de récupération de l'information car d'une part l'ordinateur est en possession de tous les renseignements utiles pour la récupération de l'information, d'autre part le procédé ne requiert pas d'intervention humaine susceptible de ralentir l'ordinateur portable. A la fin de la récupération l'ordinateur revient à son état initial, c'est-à-dire à un état de veille.

Dans une variante cette récupération se fait avec l'écran éteint, ce qui permet d'effectuer une récupération à faible coût énergétique. A l'extrême, il est même possible d'imaginer que tous les composants de l'ordinateur soient éteints à l'exception de la carte de communication qui agit en autonomie et qui récupérera les données. Les données récupérées par la carte seront transférées sur l'ordinateur portable lors du premier réveil de l'ordinateur portable initié par l'utilisateur.

L'invention a donc pour objet un procédé de réveil d'un ordinateur autonome branché à un dispositif de connexion sans fil caractérisé en ce que:
- le dispositif de connexion sans fil reçoit, via une voie aérienne, un message court, selon les normes de communication mobile, de réveil comportant au moins un champ comportant au moins un code instruction,
- le dispositif de connexion sans fil analyse le message de réveil reçu pour déterminer s'il y a lieu de réveiller l'ordinateur autonome, - le cas échéant:
- le dispositif de connexion sans fil réveille l'ordinateur autonome,
- le dispositif de connexion sans fil transmet le message reçu à l'ordinateur autonome,
- l'ordinateur autonome effectue les opérations correspondant à au moins le code instruction du au moins le champ du message de réveil.

**Dans un mode de réalisation** l'invention est aussi caractérisée en ce que:
- le code instruction correspond à une instruction pour télécharger un contenu numérique,
- le message court comporte un identifiant de contenu du contenu numérique,
- l'ordinateur autonome une fois réveillé par le dispositif de connexion sans fil établit une connexion en mode données avec un réseau de télécommunication pour télécharger le contenu numérique identifié par l'identifiant de contenu.

**Dans un mode de réalisation** l'invention est aussi caractérisée en ce que la connexion en mode données est établie via le dispositif de connexion sans fil.

**Dans un mode de réalisation** l'invention est aussi caractérisée en ce que la connexion en mode données est établie via une seconde interface différente du dispositif de connexion sans fil ayant permis la réception du message de réveil.

**Dans un mode de réalisation** l'invention est aussi caractérisée en ce que:
- le code instruction correspond à une instruction pour télécharger un contenu numérique,
- le message court comporte un identifiant de contenu du contenu numérique,
- le dispositif de connexion sans fil établit une connexion en mode données pour télécharger dans une mémoire de contenu qu'il comporte le contenu numérique identifié par l'identifiant de contenu.

**Dans un mode de réalisation** l'invention est aussi caractérisée en ce que:
- la carte de communication sans fil réveille l'ordinateur autonome,
- l'ordinateur autonome récupère le contenu de la mémoire de contenu du dispositif de connexion sans fil.

**Dans un mode de réalisation** l'invention est aussi caractérisée en ce que :
- un utilisateur de l'ordinateur autonome initie le réveil de cet ordinateur,
- l'ordinateur autonome récupère le contenu de la mémoire de contenu du dispositif de connexion sans fil.

**Dans un mode de réalisation** l'invention est aussi caractérisée en ce que une fois effectuées les opérations correspondant à au moins le code instruction du au moins le champ du message de réveil, l'ordinateur retourne dans un mode de veille.

**Dans un mode de réalisation** l'invention est aussi caractérisée en ce que le message de réveil comporte au moins un champ comportant au moins une information d'authentification de l'émetteur du message de réveil, le traitement du code instruction étant alors conditionné par l'acceptation de l'information d'authentification par l'ordinateur autonome.

**Dans un mode de réalisation** l'invention est aussi caractérisée en ce que le réveil de l'ordinateur autonome est partiel et son écran n'est pas activé.

**Dans un mode de réalisation** l'invention est aussi caractérisée en ce que, préalablement à l'interprétation du code instruction du message de réveil, le dispositif de connexion sans fil analyse l'état du réseau.

L'invention sera mieux comprise à la lecture de la description qui suit et à l'examen des figures qui l'accompagnent. Celles-ci sont présentées à titre indicatif et nullement limitatif de l'invention. Les figures montrent:
Figure 1: une illustration de moyens permettant la mise en oeuvre de l'invention.
Figure 2: une illustration d'une carte de communication mettant en oeuvre le procédé selon l'invention.
Figure 3: une illustration d'étapes du procédé selon l'invention.
Figure 4: une illustration d'étapes d'une variante du procédé selon l'invention.

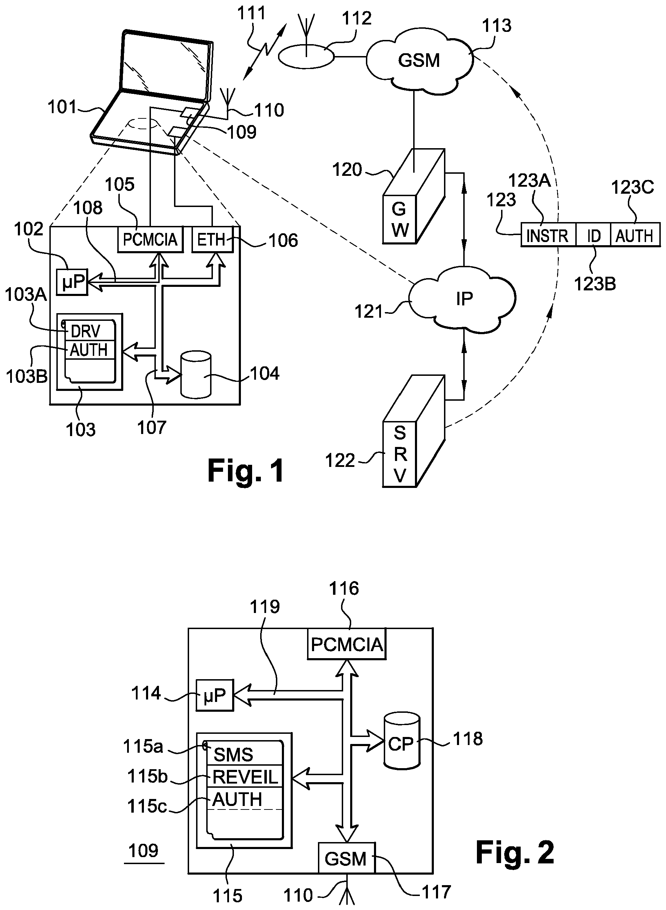

La figure 1 montre un ordinateur 101 autonome. Dans la pratique il s'agit d'un ordinateur dit portable dont la seule source d'alimentation est une batterie non représentée. L'ordinateur 101 comporte un microprocesseur 102, une mémoire 103 de programme, une mémoire 104 de stockage, une interface 105 de connexion de type PCMCIA et, dans une variante, une interface 106 de connexion de type Ethernet. Les éléments 102 à 106 sont connectés via un bus 107. Le bus 107 comporte en particulier un fil ou piste 108 pour véhiculer un signal d'interruption produit par l'interface 105. Une interface de type PCMCIA doit être comprise comme une interface permettant la connexion d'un périphérique d'extension à l'ordinateur 101. Dans ce domaine on connaît les bus de fond de panier (ISA, PCI, ...) et les ports externes (USB, RS232, ...)

D'une manière générale, dans cette description, lorsque l'on prête une action à un appareil, cette action est effectuée par un microprocesseur de l'appareil commandé par des codes instructions enregistrés dans une mémoire de programme de l'appareil.

L'interface 105 PCMCIA permet le branchement, sur l'ordinateur 101, d'une carte 109 de communication. Pour l'invention, cette carte est du type carte de communication sur un réseau de télécommunication mobile comme par exemple le GSM, le GPRS, ou l'UMTS. Cette carte est un exemple de dispositif de connexion sans fil.

La carte 109 comporte donc d'une part une interface PCMCIA pour communiquer avec l'ordinateur 101, et un aérien 110 permettant l'établissement d'une liaison 111 hertzienne avec une station 112 de base d'un réseau 113 de télécommunication mobile. Une carte telle que la carte 109 est connue sous l'appellation de carte modem GSM, ou carte modem GPRS.

La figure 2 montre que la carte 109 comporte un microprocesseur 114, une mémoire 115 de programme, une interface 116 de type PCMCIA, une interface 117 de télécommunication connectée à l'aérien 110, et dans une variante, une mémoire 118 de stockage. Les éléments 114 à 118 sont connectés via un bus 119. Les interfaces 105 et 116 coopèrent pour permettre à l'ordinateur de communiquer avec la carte 109.

La mémoire 103 comporte une zone 103a comportant des codes instructions permettant à l'ordinateur 101 de communiquer avec la carte 109 via l'interface 105. Ces codes instructions sont connus sous le nom de pilote ou driver. La mémoire 103 comporte aussi, dans une variante, des codes instructions permettant de réaliser une authentification d'un message.

La mémoire 115 comporte une zone 115a comportant des codes instructions permettant à la carte 109 de recevoir des messages courts.

Un message court et aussi connu sous l'appellation de message SMS (Short Message Service, pour service de message court). Un message de type message court est donc un message similaire au message SMS. Cela englobe au moins les de type messages MMS (Multimedia Message Service, pour service de message multimédia), et plus généralement les messages pouvant être poussé sur un dispositif de communication mobile selon les deuxième génération (GSM), deuxième génération et demi (GPRS), troisième génération (UMTS), et génération à venir de normes de communication mobile. Ici on ne parle que de message court. Cependant, il est possible de généraliser le procédé à l'utilisation de connexions de données entrantes, ou même à l'extrême d'utiliser des éléments de la signalisation offerte par les réseaux mobiles.

La mémoire 115 comporte aussi une zone 115b comportant des codes instruction permettant le réveil de l'ordinateur 101. La mémoire 115 comporte, dans une variante, une zone 115c comportant des codes instructions permettant de réaliser une authentification d'un message.

La figure 1 montre aussi que le réseau 113 comporte une passerelle 120 entre le réseau 113 de télécommunication (fermé) de type GSM, et un réseau (ouvert) 121 de type Internet. La figure 1 montre encore un serveur 122 d'une part connecté au réseau 121, d'autre part comportant des moyens pour envoyer un message 123 court à la carte 109 via le réseau 113. Dans la pratique le serveur 122 comporte lui aussi une carte modem lui permettant d'émettre des messages courts. Le serveur 122 peut également être directement connecté au réseau mobile de l'opérateur sans utiliser de carte modem.

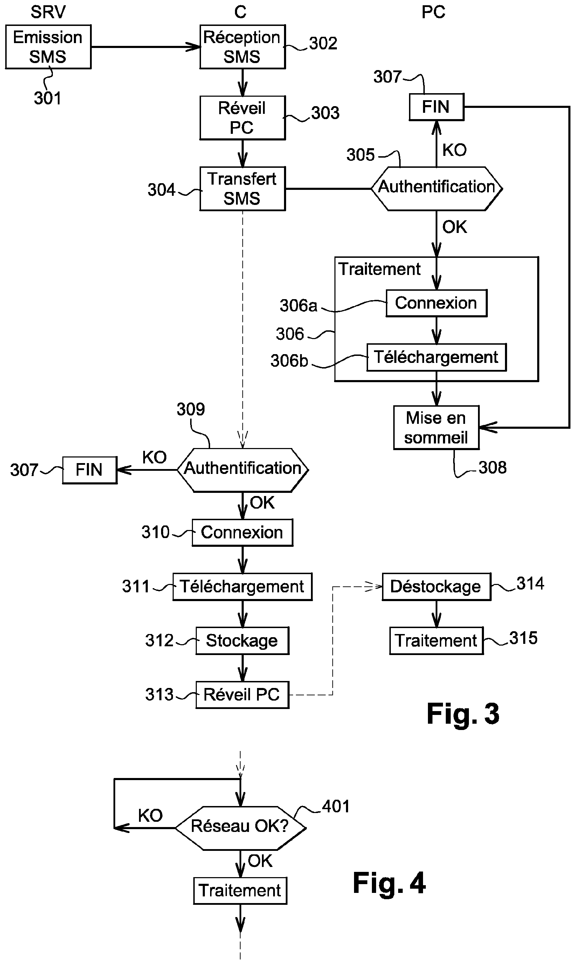

La figure 3 montre que dans une étape 301 préliminaire le serveur 122 émet un message 123 court à destination de la carte 109. A ce moment on considère que l'ordinateur 101 est en veille. Cela signifie que tous ses composants sont éteints.

De manière à pouvoir recevoir un message court, la carte 109 est donc identifiée sur le réseau 113. Cette identification se fait par un numéro MSISDN, c'est-à-dire un numéro de téléphone. La carte 109 comporte donc une carte SIM. On note que dans une variante de l'invention, on utilise un téléphone mobile à la place de la carte 109. Ce téléphone mobile est alors connecté à l'ordinateur 101 et sert de modem. Dans l'invention, la carte 109 (ou le téléphone mobile équivalent) est donc tout le temps alimentée de manière à pouvoir recevoir un message SMS. Dans le domaine de la téléphonie mobile on maîtrise parfaitement les problèmes de consommation d'énergie qui sont bien moins importants que dans le domaine des ordinateurs portables. Cette variante du procédé utilisant un téléphone mobile en lieu et place d'une carte présente quelques avantages. En effet, le téléphone mobile joue alors le rôle de la carte de communication et il existe une connexion locale entre le téléphone mobile et l'ordinateur portable. Cette connexion est, par exemple, infrarouge câblée, radio etc. Le principal avantage de cette variante est que le téléphone mobile étant presque toujours allumé, ce dernier récupère les données de façon transparente pour l'utilisateur. Ces données sont alors stockées dans le téléphone mobile et peuvent être transférées automatiquement sur l'ordinateur portable lors du premier réveil initié par l'utilisateur. En effet un ordinateur portable consomme bien plus qu'un téléphone mobile, et de ce fait tient moins longtemps en activité bien qu'ayant une batterie plus volumineuse. Ainsi le fait de maintenir en permanence l'alimentation de la carte 109 n'est pas préjudiciable à l'autonomie de l'ordinateur 101, car cette carte consomme très peu d'énergie.

Dans l'invention, un ordinateur en mode de veille maintient donc l'alimentation de la carte 109. Celle-ci présente alors une consommation comparable à celle d'un téléphone portable en mode veille.

De l'étape 301 on passe à une étape 302 de réception du message 123 court par la carte 109. Dans cette étape la carte 109 enregistre le message 123, par exemple dans la mémoire 118. Dans une variante préférée, la carte 109 effectue une première analyse du message 123 pour décider du réveil de l'ordinateur. Cette première analyse se fait, par exemple, sur la structure du message 123 et le contenu des champs qu'il comporte. Si la structure n'est pas correcte, ou si les champs ne sont pas correctement formatés, alors le message court est ignoré.

Dans l'étape 303 la carte 109 envoie un signal d'interruption via les interfaces 116 et 105, et la piste 108. Cette interruption est intercepté par un contrôleur d'interruptions du microprocesseur 102. Dans la pratique les contrôleurs d'interruptions sont parmi les seuls éléments d'un ordinateur portable qui restent alimentés lorsque celui-ci est en mode veille. En effet l'ordinateur portable se réveille suite à une sollicitation de son utilisateur via un clavier ou un dispositif de pointage. Cette sollicitation prend la forme, pour le microprocesseur 102 d'une interruption.

Dans l'étape 303, le microprocesseur 102 reçoit donc l'interruption émise par la carte 109. Le microprocesseur 102 sait que cette interruption vient de la carte 109 car elle est véhiculée par la piste 108 prédéfinie du bus 107. Le microprocesseur utilise alors les codes instructions de la zone 103a pour traiter cette interruption.

Ce traitement consiste, dans un exemple préféré, en un réveil partiel de l'ordinateur 101. Ce réveil est partiel car l'écran de l'ordinateur 101 n'a pas besoin d'être allumé pour que l'ordinateur effectue le traitement du message court. Dans l'étape 303, l'ordinateur 101 est donc réveillé à l'exception de son écran. Dans une variante il est aussi possible d'alimenter l'écran ce qui permet, par exemple, d'attirer l'attention de l'utilisateur qui peut alors suivre l'activité de l'ordinateur 101 sur cet écran.

Une fois l'ordinateur 101 réveillé, on passe à une étape 304 dans laquelle la carte 109 transmet à l'ordinateur 101 le message 123 reçu à l'étape 302.

La figure 1 montre que le message 123 comporte un champ 123a comportant un code instruction, un champ 123b comportant un identifiant d'une information et, dans une variante, un champ 123c comportant des données d'authentification.

De l'étape 304 on passe à une étape 305 facultative d'authentification du message 123. Dans cette étape l'ordinateur 101 utilise les données du champ 123c pour authentifier le message 123. Cette authentification consiste à déterminer la provenance du message de manière à comparer cette provenance avec une liste d'expéditeurs autorisés à envoyer de tels messages à l'ordinateur 101. Dans cette optique le contenu du champ 123c peut être simplement un numéro de téléphone de l'émetteur, une adresse IP, une adresse mail, ou toute autre donnée permettant l'identification d'une personne. Dans une variante plus sophistiquée, la donnée d'authentification est une signature numérique utilisant des technologies de chiffrement asymétrique et en particulier des certificats délivrés par des autorités de certification. Dans cette variante il devient quasiment impossible d'usurper une identité et d'envoyer des messages "malicieux".

L'étape 305 permet donc à la fois de lutter contre les actes de malveillance, mais aussi contre les courriers non sollicités.

Une fois la donnée d'authentification obtenue, l'ordinateur 101 vérifie si l'expéditeur ainsi authentifié est autorisé à envoyer ce type de message à l'ordinateur 101. Cette vérification se fait, par exemple, en parcourant une table d'autorisation associant des données d'authentification à des droits. Si le résultat de l'authentification est positif, c'est-à-dire si l'expéditeur authentifié est autorisé à expédier le message 123 à l'ordinateur 101, on passe à une étape 306 de traitement. Sinon on passe à une étape 307 de fin dans laquelle l'ordinateur 101 efface le message 123 de sa mémoire, puis passe à une étape 308 de mise en sommeil de l'ordinateur.

Dans l'étape 308, l'ordinateur retourne dans le mode dans lequel il était avant d'être sollicité à l'étape 303 par la carte 109.

Dans l'étape 306 l'ordinateur lit le contenu du champ 123a pour déterminer quelle action doit être entreprise suite à la réception du message 123. Le traitement est donc une interprétation du, ou des, codes instructions que comporte le message reçu à l'étape 302. Dans notre exemple on considère qu'il s'agit de la récupération d'une information sur le serveur 122 du réseau Internet. Dans la pratique cette information peut être considérée comme un fichier à télécharger.

Dans une variante le champ 123a contient plusieurs codes instructions devant être exécutés par l'ordinateur 101. Par exemple un code pour récupérer une information qui est un programme de mise à jour qui doit être exécuté ensuite. Il est aussi possible que l'information récupérée soit une requête demandant d'émettre d'autres informations depuis l'ordinateur 101. Il est encore possible que le message 123 soit lui-même une requête demandant l'émission d'informations depuis l'ordinateur 101.

L'étape 306 comporte une sous-étape 306a d'établissement d'une connexion sur le réseau Internet. Cette connexion est une connexion en mode données permettant à la carte 109 d'accéder au réseau 121 via le réseau 113 et la passerelle 120. Une telle connexion est connue sous la désignation de connexion GSM en mode données, connexion GPRS, ou autre type de connexion en mode données existant sur les réseaux de télécommunications mobiles. Ici le mode données s'oppose aux modes voix, signalisation, ou veille.

Dans l'étape 306a, la carte 109, commandé par l'ordinateur 101 sort de son mode de veille pour entrer dans un mode actif lui permettant d'établir une connexion en mode données à travers le réseau 113.

De l'étape 306a, on passe à une étape 306b de récupération de l'information. Dans l'étape 306b, l'ordinateur 101 utilise le contenu du champ 123b ainsi que la connexion établie à l'étape 306a pour récupérer les informations identifiées par le contenu du champ 123b. Dans un exemple préféré, le champ 123b comporte une URL (Universal Resource Locator, pour adresse universelle d'une ressource) permettant d'identifier toutes les ressources, ou informations, disponibles sur le réseau Internet. Une URL bien formée spécifie en effet un protocole, un identifiant d'un serveur et un identifiant d'une ressource sur ce serveur.

Avec ce procédé, l'ordinateur 101 est donc capable de récupérer n'importe quelle information disponible sur le réseau Internet.

Une fois la récupération de l'information terminée, on parle aussi de téléchargement, on passe à l'étape 308.

Lors du prochain réveil de l'ordinateur 101 suite à une sollicitation d'un utilisateur, l'utilisateur aura l'information récupérée à l'étape 306b directement disponible dans la mémoire 104 de l'ordinateur 101. Il n'y a donc plus de manipulation humaine, attente de connexion, ni recherche pour l'obtention de cette information.

Dans une variante de l'invention, le message 123 sert à avertir l'ordinateur 101 que des nouveaux messages électroniques sont arrivés sur le compte de l'utilisateur et qu'il faut les récupérer. Cela dispense l'ordinateur 101 d'avoir à faire des interrogations régulières du compte.

Dans une variante de l'invention, le message 123 permet de récupérer et d'installer des mises à jour de logiciels installés sur l'ordinateur 101.

La figure 3 illustre aussi une variante de l'invention dans laquelle des étapes 309, 310 et 311, identiques aux étapes 305, 306a et 306b sont mises en oeuvre par la carte 109 sans qu'il y ait besoin de réveiller l'ordinateur 101. Dans cette variante on passe de l'étape 302 à l'étape 309. On observe que dans cette variante, les étapes décrites peuvent aussi être mise en oeuvre par un téléphone mobile susceptible d'être localement connecté à l'ordinateur 101 portable. Dans ce cas de figure, le téléphone mobile joue le rôle de modem.

Dans cette variante on passe de l'étape 311 à une étape 312 dans laquelle la carte 109 enregistre l'information récupérée dans la mémoire 118.

De l'étape 312 on passe à une étape 313 de réveil de l'ordinateur 101. Ce réveil est dû soit à une action de l'utilisateur de l'ordinateur 101, soit à une action de la carte 109 à la fin du stockage 312.

De l'étape 313 on passe à une étape 314 de déstockage dans laquelle l'ordinateur 101 récupère dans la mémoire 118 l'information récupérée à l'étape 311 par la carte 109.

Puis dans une étape 315, l'ordinateur 101 traite l'information récupérée à l'étape 314 selon des actions de l'utilisateur, et ou les codes instructions du champ 123a.

Dans cette variante, l'ordinateur n'est pas réveillé pour effectuer le téléchargement. Cela permet d'effectuer des économies d'énergie supplémentaires. A son réveil l'ordinateur 101 accède à l'information récupérée dans la mémoire 118. Dans la pratique cette mémoire est vue par l'ordinateur 101 comme un disque dur local. La récupération depuis la mémoire 118 est donc soit très rapide, soit inutile car l'ordinateur 101 peut exploiter l'information récupérée directement depuis la mémoire 118.

La figure 4 montre une variante de l'invention dans laquelle une étape 401 d'analyse du réseau fait suite à l'étape 305 ou à l'étape 309. Dans l'étape 401, le dispositif de connexion sans fil analyse l'état du réseau de télécommunication auquel il est connecté de manière à déterminer s'il est pertinent d'effectuer le traitement décrit par le message reçu à l'étape 302. Cette analyse est, par exemple, une mesure du débit réel du réseau. Cette mesure est ensuite comparée au débit théorique. Si le débit réel mesuré est trop inférieur au débit théorique, par exemple à moitié moindre, alors le traitement décrit par le message reçu à l'étape 302 n'est pas effectué car les conditions ne sont pas favorables.

Il est possible de mettre en oeuvre d'autres critères de pertinence comme par exemple un débit réel minimum, une durée de récupération calculée maximale, un coût de récupération calculé maximal. Connaissant la taille du fichier à récupérer, et le débit réel, il est en effet possible d'estimer le temps et le coût de récupération. Dans cette variante, soit le message reçu à l'étape 302 comporte une description du fichier à récupérer, soit le dispositif en obtient une avant d'effectuer le traitement décrit. Il est aussi possible de baser le critère de pertinence uniquement sur le débit réel. Dans certains cas il est aussi possible que le coût des communications varie en fonction de la localisation et de la date. Dans ces cas, l'analyse du réseau en tient compte pour éventuellement reporter le traitement décrit à une date et ou à une localisation de l'ordinateur 101 portable plus favorable. Tous ces critères de pertinence peuvent être employés seul, ou en combinaison de tous ou d'un certain nombre d'entre eux.

Dans la variante de la figure 4, le dispositif de connexion sans fil évalue un critère de pertinence, et tant que ce critère de pertinence n'est pas atteint, le traitement décrit par le message reçu à l'étape 302 n'est pas effectué. Dès que le critère de pertinence est atteint, on passe de l'étape 401 aux étapes de traitement.

Dans une autre variante de l'invention le message 123 spécifie une interface pour effectuer la récupération d'informations. Il s'agit, par exemple de l'interface Ethernet 106. Dans cette variante l'ordinateur 101 reçoit un message court via l'interface 105 et la carte 109 pour effectuer une récupération d'information via l'interface 106. Cette récupération se fera alors lorsque l'ordinateur 101 sera raccordé à un réseau filaire local, et probablement au secteur. De manière encore plus avantageuse, l'ordinateur portable, la carte ou le téléphone mobile, attendra de détecter automatiquement qu'il/elle est dans une zone couverte par un réseau mobile avec un plus fort débit et/ou une exploitation moins onéreuse (par exemple WLAN) avant d'initier le téléchargement des données. L'intérêt de cette variante est la récupération d'une information volumineuse, c'est-à-dire de très gros fichiers. De tels fichiers requièrent en effet une bande passante importante, et ou une autonomie prolongée car le temps de récupération peut être long. Un fichier commence à être considéré comme très gros, pour une connexion via un réseau de télécommunication mobile, à partir de 5 Mega-octets.

L'invention permet donc de gérer l'autonomie et la mobilité d'un ordinateur autonome au mieux, et avec une grande flexibilité.

## Revendications

1. Procédé de réveil d'un ordinateur autonome **branché à** un dispositif de connexion sans fil (109) **caractérisé en ce que**:
- le dispositif de connexion sans fil reçoit (302), via une voie aérienne, un message (123) **court, selon les normes de communications mobiles,** de réveil comportant au moins un champ comportant au moins un code (123a) instruction,
- le dispositif de connexion sans fil analyse (302) le message de réveil reçu pour déterminer s'il y a lieu de réveiller l'ordinateur autonome,
- le cas échéant:
- le dispositif de connexion sans fil réveille (303) l'ordinateur autonome,
- le dispositif de connexion sans fil transmet (304) le message reçu à l'ordinateur autonome,
- l'ordinateur autonome effectue (306) les opérations correspondant à au moins le code instruction du au moins le champs du message de réveil.

2. Procédé selon la revendication 1, **caractérisé en ce que**:
- le code instruction correspond à une instruction pour télécharger un contenu numérique,
- le message court comporte un identifiant (123b) de contenu du contenu numérique,
- l'ordinateur autonome une fois réveillé par le dispositif de connexion sans fil établit (306a) une connexion en mode données avec un réseau de télécommunication pour télécharger (306b) le contenu numérique identifié par l'identifiant de contenu.

3. Procédé selon la revendication 2, **caractérisé en ce que** la connexion en mode données est établie via le dispositif de connexion sans fil.

4. Procédé selon la revendication 2, **caractérisé en ce que** la connexion en mode données est établie via une seconde interface (106) différente du dispositif de connexion sans fil ayant permis la réception du message de réveil.

5. Procédé selon la revendication 1, **caractérisé en ce que**:
- le code instruction correspond à une instruction pour télécharger un contenu numérique,
- le message court comporte un identifiant de contenu du contenu numérique,
- le dispositif de connexion sans fil établit (310) une connexion en mode données pour télécharger (311) dans une mémoire (118) de contenu qu'il comporte le contenu numérique identifié par l'identifiant de contenu.
- le dispositif de connexion sans fil réveille (313) l'ordinateur autonome,
- l'ordinateur autonome récupère (314) le contenu de la mémoire du dispositif de connexion sans fil.

6. Procédé selon la revendication 5 **caractérisé en ce que** :
- un utilisateur de l'ordinateur autonome initie le réveil de cet ordinateur,
- l'ordinateur autonome récupère (314) le contenu de la mémoire de contenu du dispositif de connexion sans fil.

7. Procédé selon l'une des revendications 1 à 6, **caractérisé en ce que** une fois effectuées les opérations correspondant à au moins le code instruction du au moins le champ du message de réveil, l'ordinateur retourne (308) dans un mode de veille.

8. Procédé selon l'une des revendications 1 à 7, **caractérisé en ce que** le message de réveil comporte au moins un champ (123c) comportant au moins une information d'authentification de l'émetteur du message de réveil, le traitement du code instruction étant alors conditionné par l'acceptation de l'information d'authentification par l'ordinateur autonome.

9. Procédé selon l'une des revendications 1 à 8, **caractérisé en ce que** le réveil de l'ordinateur autonome est partiel.

10. Procédé selon l'une des revendications 1 à 9, **caractérisé en ce que**, préalablement à l'interprétation du code instruction du message de réveil, le dispositif de connexion sans fil analyse (401) l'état du réseau.

## Patentansprüche

1. Verfahren zum Aufwecken eines autonomen Computers, der an eine drahtlose Verbindungsvorrichtung (109) angeschlossen ist, **dadurch gekennzeichnet, dass**:
- die drahtlose Verbindungsvorrichtung über einen Luftweg gemäß den Mobilkommunikationsnormen eine Aufweckkurznachricht (123) mit mindestens einem Feld, das mindestens einen Befehlscode (123a) umfasst, empfängt (302),
- die drahtlose Verbindungsvorrichtung die empfangene Aufwecknachricht analysiert (302), um zu bestimmen, ob ein Grund besteht, den autonomen Computer aufzuwecken,
- gegebenenfalls:
- die drahtlose Verbindungsvorrichtung den autonomen Computer aufweckt (303),
- die drahtlose Verbindungsvorrichtung die empfangene Nachricht zum autonomen Computer überträgt (304),
- der autonome Computer die Operationen durchführt (306), die zumindest dem Befehlscode zumindest des Feldes der Aufwecknachricht entsprechen.

2. Verfahren nach Anspruch 1, **dadurch gekennzeichnet, dass**:
- der Befehlscode einem Befehl zum Herunterladen eines digitalen Inhalts entspricht,
- die Kurznachricht einen Inhaltsidentifizierer (123b) des digitalen Inhalts umfasst,
- der autonome Computer, sobald er durch die drahtlose Verbindungvorrichtung aufgeweckt ist, eine Verbindung im Datenmodus mit einem Telekommunikationsnetz herstellt (306a), um den durch den Inhaltsidentifizierer identifizierten digitalen Inhalt herunterzuladen (306b).

3. Verfahren nach Anspruch 2, **dadurch gekennzeichnet, dass** die Verbindung im Datenmodus über die drahtlose Verbindungsvorrichtung hergestellt wird.

4. Verfahren nach Anspruch 2, **dadurch gekennzeichnet, dass** die Verbindung im Datenmodus über eine zweite Schnittstelle (106), die von der drahtlosen Verbindungsvorrichtung verschieden ist, hergestellt wird, die den Empfang der Aufwecknachricht gestattet hat.

5. Verfahren nach Anspruch 1, **dadurch gekennzeichnet, dass**:
- der Befehlscode einem Befehl zum Herunterladen eines digitalen Inhalts entspricht,
- die Kurznachricht einen Inhaltsidentifizierer des digitalen Inhalts umfasst,
- die drahtlose Verbindungvorrichtung eine Verbindung im Datenmodus zum Herunterladen (311) des digitalen Inhalts, der durch den Inhaltsidentifizierer identifiziert wird, in einen Inhaltsspeicher (118) herstellt (310), den sie umfasst,
- die drahtlose Verbindungsvorrichtung den autonomen Computer aufweckt (313),
- der autonome Computer den Inhalt des Speichers der drahtlosen Verbindungsvorrichtung wiedergewinnt (314) .

6. Verfahren nach Anspruch 5, **dadurch gekennzeichnet, dass**:
- ein Benutzer des autonomen Computers das Aufwecken dieses Computers einleitet,
- der autonome Computer den Inhalt des Inhaltsspeichers der drahtlosen Verbindungsvorrichtung wiedergewinnt (314).

7. Verfahren nach einem der Ansprüche 1 bis 6, **dadurch gekennzeichnet, dass**, sobald die Operationen durchgeführt sind, die zumindest dem Befehlscode zumindest des Feldes der Aufwecknachricht entsprechen, der Computer in einen Bereitschaftsmodus zurückkehrt (308) .

8. Verfahren nach einem der Ansprüche 1 bis 7, **dadurch gekennzeichnet, dass** die Aufwecknachricht mindestens ein Feld (123c) mit mindestens einer Authentifizierungsinformation des Senders der Aufwecknachricht umfasst, wobei die Verarbeitung des Befehlscodes dann durch die Annahme der Authentifizierungsinformation durch den autonomen Computer bedingt wird.

9. Verfahren nach einem der Ansprüche 1 bis 8, **dadurch gekennzeichnet, dass** das Aufwecken des autonomen Computers teilweise ist.

10. Verfahren nach einem der Ansprüche 1 bis 9, **dadurch gekennzeichnet, dass** vor der Interpretation des Befehlscodes der Aufwecknachricht die drahtlose Verbindungsvorrichtung den Zustand des Netzes analysiert (401) .

## Claims

1. Method for waking up a stand-alone computer connected to a wireless connecting device (109), **characterized in that**:
- the wireless connecting device receives (302), via an over-air channel, a short wakeup message (123) meeting a mobile communication standard, including at least one field containing at least one instruction code (123a);
- the wireless connecting device analyzes (302) the received wakeup message in order to determine whether there is reason to wake up the stand-alone computer; and
- where appropriate:
- the wireless connecting device wakes up (303) the stand-alone computer;
- the wireless connecting device transmits (304) the received message to the stand-alone computer; and
- the stand-alone computer performs (306) the operations corresponding to the at least one instruction code of the at least one field of the wakeup message.

2. Method according to Claim 1, **characterized in that**:
- the instruction code corresponds to an instruction to download a digital content;
- the short message includes a content identifier (123b) identifying the digital content; and
- the stand-alone computer, once woken up by the wireless connecting device, establishes (306a) a data-mode connection with a telecommunications network in order to download (306b) the digital content identified by the content identifier.

3. Method according to Claim 2, **characterized in that** the data-mode connection is established via the wireless connecting device.

4. Method according to Claim 2, **characterized in that** the data-mode connection is established via a second interface (106) different from the wireless connecting device that allowed the wakeup message to be received.

5. Method according to Claim 1, **characterized in that**:
- the instruction code corresponds to an instruction to download a digital content;
- the short message includes a content identifier identifying the digital content;
- the wireless connecting device establishes (310) a data-mode connection in order to download (311), into a content memory (118) that it includes, the digital content identified by the content identifier;
- the wireless connecting device wakes up (313) the stand-alone computer; and
- the stand-alone computer fetches (314) the content from the memory of the wireless connecting device.

6. Method according to Claim 5, **characterized in that**:
- a user of the stand-alone computer initiates the wakeup of this computer; and
- the stand-alone computer fetches (314) the content from the content memory of the wireless connecting device.

7. Method according to one of Claims 1 to 6, **characterized in that** once the operations corresponding to the at least one instruction code of the least one field of the wakeup message have been performed, the computer returns (308) to a standby mode.

8. Method according to one of Claims 1 to 7, **characterized in that** the wakeup message includes at least one field (123c) containing at least one piece of authentication information allowing the emitter of the wakeup message to be authenticated, the processing of the instruction code then being conditional upon the acceptance of the piece of authentication information by the stand-alone computer.

9. Method according to one of Claims 1 to 8, **characterized in that** the wakeup of the stand-alone computer is partial.

10. Method according to one of Claims 1 to 9, **characterized in that**, prior to the interpretation of the instruction code of the wakeup message, the wireless connecting device analyzes (401) the state of the network.
